Europäisches Patentamt

European Patent Office

Office européen des brevets

(11) Publication number: **0 121 103**
**A1**

# EUROPEAN PATENT APPLICATION

(21) Application number: 84102149.6

(22) Date of filing: 01.03.84

(51) Int. Cl.³: **A 01 D 35/264**
**A 01 D 55/18**

(30) Priority: 02.03.83 US 471264
26.08.83 US 526689

(43) Date of publication of application:
10.10.84 Bulletin 84/41

(84) Designated Contracting States:
DE FR GB IT NL

(71) Applicant: Mathews, Violet O.
8606 Rte. 176
Crystal Lake Illinois 60014(US)

(72) Inventor: Mathews, Bernard Carl
11
deceased(US)

(74) Representative: Vogel, Georg
Hermann-Essig-Strasse 35
D-7141 Schwieberdingen(DE)

(54) **Multiple rotor mowers.**

(57) Rotor mowers having flat L-shaped blades in which the vertical portions (40, 41) are spring mounted relative to the rotating rotors (10, 11) are disclosed having a spring mounting providing yielding of the horizontal portion (42, 43) of the blade in both a vertical and horizontal direction when it strikes an obstruction and automatic return of the blade to its mowing position. Discs horizontally disposed at the lower ends of the rotors (10, 11) are segmented into readily detachable and replaceable disc portions (135a-e) for easy replacement of any replaceable disc portions (135a-e) for easy replacement of any disc portions damaged by contact with rocks. Closed ground engaging skids (14, 15) are provided beneath the discs, the ground engaging skids being formed from two dish-shaped portions having a fastening flange extending outwardly from their adjacent open ends so that the bottom portion of each disc is readily detachable and replaceable providing replacement of the bottom portion of the ground engaging skid when damaged or to obtain different height adjustments of the mower rotor assemblies.

_FIG-1_

0121103

Multiple Rotor Mowers

Field of the Invention

This invention relates to multiple rotor mowers providing
effective cutting and windrowing of the cut crop, such as
hay. The multiple rotor mowers have one or more generally
vertically disposed rotors with the bottom of each being
equipped with a relatively large diameter disc. Cutting
blades rotate with the rotor and disc and may be located
either above or below the rotors. The rotors cooperate in
pairs rotating in opposite directions to deliver the cut
grass or hay rearwardly of the mower by the action of the
cooperative pair of rotating drums and discs.

The present invention relates to the use of flat L-shaped
blades the vertical portions of which are spring mounted,
relative to the rotor, permitting yielding of the horizontal
portion in a rotary direction or in a vertical direction
upon striking of an obstruction and providing automatic
return to its desired position. The flat blade structure
inhibits torsional twisting in the blade itself while providing yielding of the blade due to the spring mounting. The
flat blade structure has reduced vertical structure thereby
reducing striking of foreign objects and reducing catching
or jamming with cut agricultural products.

The present invention also relates to use of L-shaped blades which are vertically adjustable along the side of the vertically disposed rotors. Vertical displacement of the blade portions of the cutting knives extending beneath the discs avoids contact between the blades associated with adjacent discs and rotors.

The present invention provides segmented, readily detachable and replaceable disc portions for easy replacement of any disc portons damaged by contact with rocks, or the like. Further, the mower of this invention provides for closed ground engaging skids beneath each disc, the ground engaging skids being formed from two dish-shaped portions having a fastening flange extending outwardly from their adjacent open ends. The ground engaging skids of this construction beneath each of the discs provides protection to the most vulnerably damaged portion of the cutting members. The bottom portions of the ground engaging skids are readily detachable and replaceable providing easy replacement of the portions of the ground engaging skids which may be most likely damaged and providing easy replacement of the bottom portion of the ground engaging skids to enable different height adjustments of the mower rotor assemblies. The mower assembly is spring suspended from an overhead support arm reducing the force of the ground engaging skids upon the ground.

Description of the Prior Art

A wide variety of rotor-type mowers with radially projecting cutting blades have been known to the art as exemplified by U.S. Patents 3,389,539; 3,391,522; 3,443,369; 3,550,360; 3,735,572; 4,160,356 and 4,292,790. Federal Republic of Germany Patent Publication 2,444,610 teaches horizontally swingable blades.

Prior U.S. Patent 4,292,789 teaches L-shaped spring wire blades for use on multiple drumtype mowers wherein the vertical portion of the spring wire blade provides a torsional twist yielding when the horizontal leg strikes and obstruction. The only movement of the horizontal portion of the blade taught by my 4,292,789 patent arises from flexing action or torsional action in the vertical portion of the L-shaped spring wire blade. The 4,292,789 patent teaches that the L-shaped blades are fixedly held to the drum at the top of the blade. Federal Republic of Germany Patent Publication 2,422,651 teaches L-shaped blades having their vertical portions locked in place.

U.S. Patent 4,292,790 teaches dish-shaped open ground skids beneath only alternate rotors, the opening at the top having the disadvantage of collecting foreign materials and not being readily replaceable nor readily adjustable as to height. U.S. Patent 3,389,539 teaches open top saucer-shaped ground skids beneath each mower rotor with associated canted blades, but these open, ground skids have the same disadvantages pointed out above. U.S. Patent 4,177,625 teaches flat ground engaging skids which are coupled to each other at their adjacent sides forming a rigid transverse structure beneath the cutter units.

Summary of the Invention

An important aspect of the present invention is provision of
flat L-shaped blades in which the vertical portions are
spring mounted relative to the rotating rotors of rotor
mowers. The flat steel stock of both the vertical and horizontal portion of the L-shaped blades of the present invention provides much stronger blades than the previously used
L-shaped spring wire blades. Yielding of the horizontal
portion of the blade when it strikes an obstruction is provided by the spring mounting of the vertical portion of the
blade relative to the rotor.

The flat L-shaped blade as used in the rotor mowers of this
invention may be mounted so that the horizontal portion of
the blade is either above or below the disc associated with
the rotating rotor or drum to which the blade is mounted. In
either case, the flat blade provides a much less prominent
structure beneath the disc for engagement with uneven ground
or a rock and provides a much flatter structure on top of
the disc for less collection and interference with cut
grass. The flat horizontal portions of the blades according
to the present invention may "hug" either the top or the
bottom of the disc in a much closer relation than the L-
shaped blades taught by the 4,292,789 patent which require
torsional twisting ability in the vertical portion, and thus
are normally made out of round stock. The flat blades used
in the drum mowers of this invention provide essentially nor
torsional twisting, the blade movement resulting from spring
flexing.

Further, the flat L-shaped blades, in preferred embodiments of the present invention, may be entirely mounted and contained within tunnels along the vertical exterior of the rotors thereby providing minimal exposure for collecting cut grasses and foreign objects.

These advantages are achieved by spring mounting the upper region of the vertical leg of the flat L-shaped blade in relation to the rotatable rotor by mounting to the rotor itself, or to a ring around the rotor, or to the interior portion of a vertical tunnel attached to the rotor. The blade mounting means includes an elongated portion extending through an oversized hole in the vertical portion of the blade with an enlarged spring retaining portion at one end and an attachment portion at the other end. A coil-type spring of suitable strength to permit movement of the horizontal portion of the blade upon application of a force to that portion of the blade is mounted around the shaft of the mounting means in force transmitting relationship at one end against the vertical portion of the flat blade. So mounted, the outboard end of the horizontal portion of the flat blade may readily move throughout an arc of about 20° to 45° and automatically return, due to force of the spring, to its original position when the force causing the movement is removed. Likewise, the outboard end of the horizontal portion of the blade may move upwardly or downwardly in a vertical direction an amount permitted by the inhibiting structure of the apparatus and also automatically return, due to force of the spring, to its original position when the force causing the movement is removed.

This invention provides multiple rotor mowers wherein the discs of adjacent rotors are in substantially the same horizontal plane and the discs are segmented of separate compo-

nent pieces readily detachably fastened to the associated rotor affording easy replacement of damaged portions of the disc.

This invention also provides a multiple rotor mower having closed ground engaging skids disposed beneath the discs at the bottom of the rotors, the closed ground engaging skids comprising an upper concave member and a lower concave member, each having a flange at its open end outer periphery, the upper concave member being mounted on an associated rotor with its concavity open to the bottom, and the lower concave member with its concavity open to the top being readily detachably fastened to the upper concave member in the area of the flanges. This allows ready replacement of the bottom portion of the closed ground engaging skid necessitated by damage or desire to change the height of the cutting blades from the ground surface. The closed skids provide protection to the cutting members from damage by rocks and ground irregularities.

This invention also provides a multiple rotor mower having closed ground engaging skids beneath each mower rotor, the force of such skids against the ground surface being reduced by the mower header assembly being in pivotal engagement with the frame structure at the rear of the mower and spring suspended from an overhead support arm at its forward end.


Brief description of the drawings

The above and other advantages of this invention will be apparent from the following detailed disclosure and reference to the drawings showing preferred embodiments wherein:

Fig. 1 is a front view of a portion of two cooperative mower rotors or drums shown in partial section having spring mounted flat blades in accordance with one embodiment of this invention,

Fig. 2 is a top sectional view through the section of Fig. 1 indicated as 2-2,

Fig. 3 is a front view showing two cooperative mower rotors having spring mounted flat blades according to another embodiment of this invention,

Fig. 4 shows another embodiment of the flat blades of this invention in their overlapping region,

Fig. 5 schematically shows the vertical movement of the horizontal portion of the flat blade of one embodiment of this invention which is returned to its original position by the spring mounting means,

Fig. 6 schematically shows the horizontal arcuate movement of the horizontal portion of the flat blade of one embodiment of this invention which is returned to its original position by the spring mounting means,

Fig. 7 is a front view of a mower according to one embodiment of this invention having a plurality of side-by-side mowing rotors,

Fig. 8 is a top partially sectioned and cutaway view of one embodiment of a mowing rotor as shown in Fig. 7 showing the segmented discs,

A 5403                          - 8 -

Fig. 9 is a side view, partially cutaway and sectioned, of the lower portion of a mowing rotor according to this invention showing the enclosed ground engaging skid fixedly mounted on the rotor,

Fig. 10 is a side view, partially cutaway and sectioned, of the lower portion of a mowing rotor according to this invention showing a ground engaging skid journally mounted on the rotor, and

Fig. 11 is a side view, partially cutaway showing spring suspension of the forward end of the mower header assembly.

Description of preferred embodiments

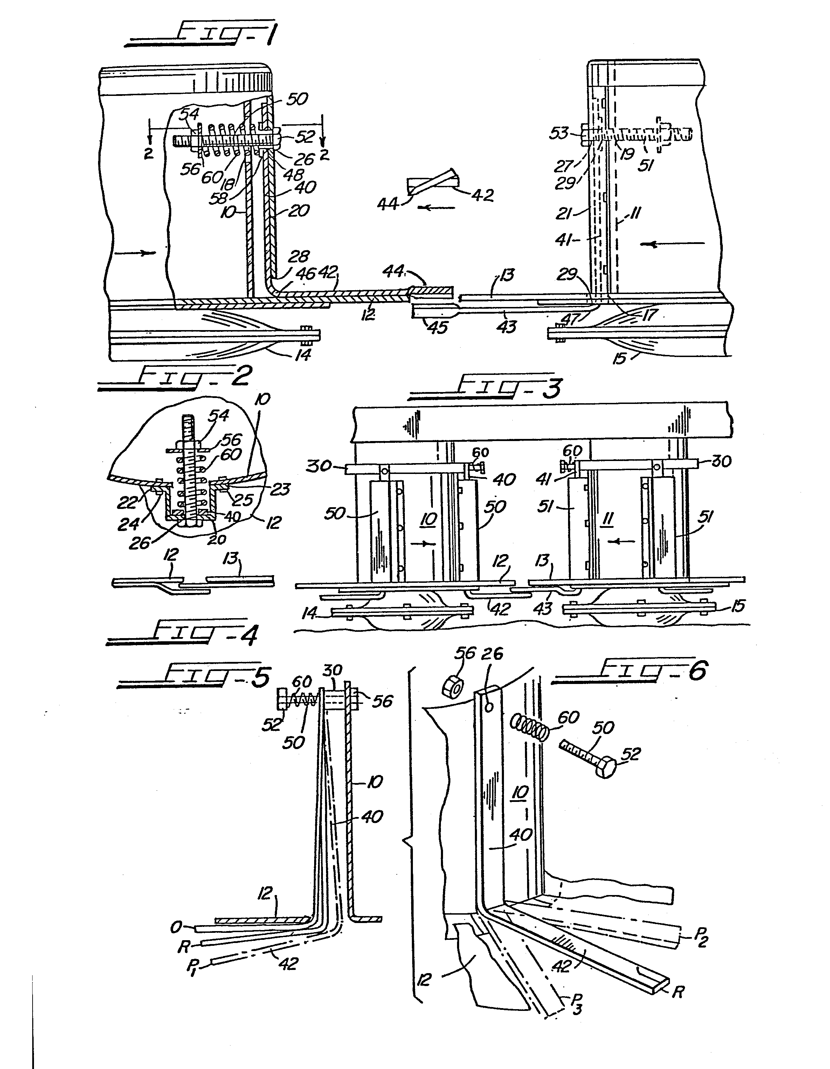

Referring to the figures, Fig. 1 shows portions of two adjacent generally vertically disposed rotatable rotors 10 and 11 with larger diameter generally horizontally disposed discs 12 and 13 at their bottom, respectively. Beneath the discs ground engaging skids 14 and 15 are shown. The rotatable drums each have a plurality of L-shaped blades with a horizontal cutting portion extending radially beyond the disc. A suitable rotor mower comprising such generally vertically disposed rotatable rotors together with their drive means are taught by prior U.S. Patent Nos. 4,160,356, 4,292,789 and 4,292,790. The features of this invention, however, are not limited to the specific mowers taught by these prior patents, but are applicable to all crop mowers having generally vertically disposed rotatable rotors with larger diameter horizontally disposed discs at their bottoms.

The present invention relates to rotor mowers wherein the L-shaped blades comprise a flat vertical portion and a flat horizontal portion, the flat vertical portion being attached in relation to the rotor by spring mounting means extending through an oversized hole in the flat vertical portion permitting movement of the blade by spring flexure. The spring mounting means is maintained in force transmitting relation to the flat vertical portion whereby horizontal application of force to the flat horizontal portion of the blade causes the spring means to flex providing arcuate yielding of the flat horizontal portion and automatic return of the blade to its desired cutting position by force of the spring. Likewise, vertical application of force to the flat horizontal portion of the blade of this invention causes the spring means to flex providing vertical yielding of the flat horizontal portion and automatic return to its cutting position by force of the spring. By flat L-shaped blades, I mean blades at least about 1/8 inch thick and having a ratio of width to thickness of about 3 to 8 and preferably flat L-shaped blades which are about 3/16 to 3/8 inch thick and have a ratio of width to thickness of about 5 to 7. The flat L-shaped blades of this invention provide a much stronger blade with the spring mounting means providing both arcuate and vertical yield to the horizontal portion of the blade, overcoming fatigue which may arise in the torsional twisting of prior blades. It is preferred that the blades be made from flat steel stock such as 1045 to 1065 high carbon steel, such as 3/16 inch thick by 1-1/4 inch wide stock which may be bent at approximately 90° and sharpened to a sharpened cutting edge at the outer extremity of the horizontal portion. The horizontal portion must be of length to extend beyond the disc, to provide overlap of the path of blades associated with an adjacent rotating disc, and extend back to the vicinity of the rotor to which it is attached. The height of the vertical portion is not important, but in practice has been a major portion of the height of the rotor. The blades may be heat treated as desired following bending.

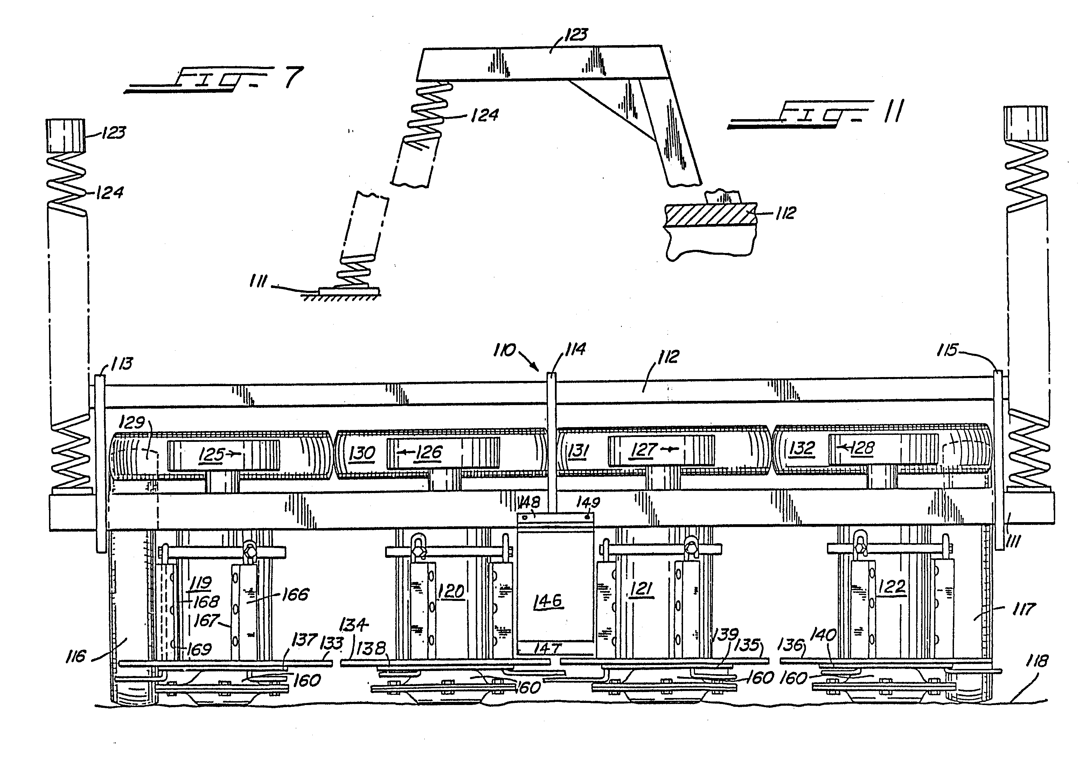

The flat horizontal portion of the blade has particular importance to the invention as seen in Fig. 1, 3 and 4 showing the closeness of operation of the flat blade to the rotatable disc. For example, in Fig. 1, the horizontal portion 42 of the blade adjacent the upper side of disc 12 may be directly in contact with the disc and in such case it is preferred that the sharpened edge portion 44 extends beyond the outer edge of disc 12 but does not overlap adjacent disc 13. In a preferred embodiment as shown in Fig. 1 and the end view insert, the end portion 44 of horizontal portion 42 is twisted with its leading sharpened edge downward. The arrow in the blade end view shows the direction of blade travel. Twisting in an amount of about 5 to about 30 degrees is suitable, about 10 to about 25 degrees being preferred. Likewise in Fig. 1 it is seen that horizontal portion 43 located below disc 13 hugs the bottom of the disc quite closely and in fact may be formed to be directly adjacent the bottom of disc 13 as shown in Fig. 3. End portion 45 of horizontal portion 43 may be twisted in the same manner as described with respect to end portion 44. When the blades of adjacent discs are located beneath the discs, they may have a configuration as shown in Fig. 3 and 4 to be as close as possible to the bottom of the discs. This closeness is made possible by the flat shape of the horizontal portion of the blades requiring less vertical space and clearance than formerly used round blades.

Referring specifically to Fig. 1 and 2, rotor 10 has vertically disposed U-shaped tunnel 20 with outwardly extending mounting flanges 22 and 23 for attachment to rotor 10 by mounting bolts 24 and 25. Tunnel blade mounting hole 26 is provided in alignment with blade mounting hole 48. Blade vertical portion 40 is shown adjacent the inside portion of tunnel 20 with blade transition portion 46 located beneath tunnel bottom end 28 and blade horizontal portion 42 extending outward radially adjacent the top of disc 12 beyond the edge of adjacent disc 13.

The spring mounting means extends through oversized mounting hole 48 in blade vertical portion 40 and comprises spring means 60 in force transmitting relation to the flat vertical portion of the blade whereby horizontal application of force to flat horizontal portion 42 of the blade causes spring means 60 to flex providing arcuate yielding of the flat horizontal portion and automatic return by the force of spring 60 to its cutting position. This is diagrammatically shown in Fig. 6 wherein blade horizontal portion 42 is shown in rest position, or cutting position, R and by application of horizontal force may yield arcuately to either position $P_2$ or $P_3$ and return to position R by force of spring 60. Likewise, as shown diagrammatically in Fig. 5, vertical application of force to flat blade horizontal portion 42 causes spring means 60 to flex providing vertical yielding of the flat horizontal portion from rest position R to position $P_1$ or position 0 and following removal of the vertical force spring means 60 automatically returns flat blade horizontal portion 42 to operating position 0 or rest position R depending upon whether the drum is rotating. As explained in greater detail in U.S. Patent 4,292,789, the blades may, by centrifual force of high speed rotation of the drums, be forced from rest position R to operating position 0.

As shown in Fig. 1 to 2, the spring mounting means has elongated shaft portion 50 extending through oversized mounting hole 48 in blade vertical portion and extending through spring mounting means hole 18 in rotor 10 which is sufficiently large to prevent engagement with spring 60. Spring 60 is a suitable coil spring encircling shaft portion 50 and in force transmitting relation to the blade flat vertical portion 40 at one end in force transmitting relation to spring retaining portion 54, shown as a nut on threaded shaft 50, at the other end. Washers 56 and 58 may be provided at each end of the spring as desired. By this manner of spring mounting, it is readily seen that blade vertical portion 40 may be moved to allow both horizontal arcuate movement and vertical movement of blade horizontal portion 42.

It is preferred to use a machine screw for providing shaft 50 to afford adjustment of spring tension by tightening or loosening of nut 54. It should, however, be readily apparent that the spring mounting means assembly may be any elongated shaft about which the coil spring may provide force for automatically returning blade vertical portion 40 to a predetermined position. This position, in the case of the embodiment shown in Fig. 1 and 2, is determined by the inside of tunnel 20. While it is shown in the figures that the spring mounting means is located in the upper region of the flat blade vertical portion, this is not critical and the spring mounting means may be located at any position in the flat blade vertical portion. A further advantage of the embodiment shown in Fig. 1 and 2 is the freedom of any intefering extension beyond the outside surface of the rotor or tunnel to catch cut hay or grass.

Yet another advantage of the embodiment shown in Fig. 1 and 2 is the provision of an assembly of the flat L-shaped blade, spring mounting means, and tunnel which may be attached to and removed from the rotor simply by removal and replacement of mounting bolts 24 and 25, providing easy replacement of the blades. The blades may be readily replaced in this assembled fashion regardless of wether the horizontal portion of the blades are located above or beneath the discs. For example, the blade horizontal portion 43 attached to rotor 11 is readily removed and replaced beneath disc 13 by insertion through blade hole 17.

Fig. 3, 5 and 6 show another embodiment whereby the blade vertical portions 40 and 41 may be attached either directly to rotor 10 or 11, or to a ring 30 extending outwardly from the rotor. Fig. 3 and 5 show the flat blade vertical portions 40 and 41 attached to ring 30 extending outwardly from rotor 10. Fig. 6 schematically shows flat blade vertical portion 40 attached directly to rotor 10, which embodiment will limit the vertically downward motion possible in flat blade horizontal portion 42. In these embodiments, the spring means operates in the same force transmitting relation to the flat vertical portion of the knife as explained above. In the embodiments shown in Fig. 3, 5 and 6, spring 60 extends between mounting shaft head 52 and blade vertical portion 60 with mounting shaft 50 extending through oversized blade mounting hole 26 and secured by nut 56 on the interior of drum 10.

Referring to Fig. 7, frame structure 110 is carried on ground engaging wheels 116 and 117. The frame structure includes upper frame transverse beam 112 and overhead support arm 123. Transverse mower header beam 111 and the mower header assembly are in pivotal engagement with frame structure 110 at the rear of the mower and the front end of the mower header assembly is suspended by spring 124 from the end of overhead support arm 123. The manner of suitable pivot connection is readily apparent and does not need to be further shown here. Likewise, not shown in the drawings is a suitable drawbar and tractor hitch with associated power take off drives for the mower. An example of a suitable drawbar and power drive are shown in my U.S. Patent 4,160,356. The surface of the ground over which the mower travels is shown by numeral 118.

A plurality of substantially side-by-side vertically disposed rotors 119, 120, 121 and 122 are journally supported in mower header beam 111 and depend downwardly therefrom. While four rotors are shown in Fig. 7, any number of rotors may be employed, however, it is preferred that an even number of rotors be used, such as two, four or six, so that adjacent rotors operate in opposite rotary motion providing cooperation to effect windrowing of the cut crop between the adjacent rotors. By the terminology of the vertically disposed rotors being substantially side-by-side, I mean to include both rotors having their axes of rotation along a single transverse line as shown by prior U.S. Patent 4,292,789 or having their axes of rotation staggered and aligned in two transverse lines as shown by prior U.S. Patent 4,160,356. The latter arrangement provides greater overlap of the cutting swaths.

A viewed from the front of the mower (Fig. 7) adjacent rotors moving in opposite rotary directions away from each other create undesired air currents which blow light hay or grasses downwardly preventing desired mowing action. Such undesired air currents may be deflected upwardly by providing upwardly, forwardly inclined deflector 146, preferably with lower flexible portion 147, between adjacent mowing rotors moving in opposite rotary directions as viewed from the front of the mower. Deflector 146 may be attached to mower header beam 111 by projecting frame 148 and bolts 149.

The upper portion of each mowing rotor 119, 120, 121 and 122 is provided with a driving cylinder 125, 126, 127 and 128, respectively, which are preferably driven by drive wheels 129, 130, 131 and 132 with pneumatic tires as more fully described in prior U.S. Patent 4,160,356.

However, any suitable means for imparting rotory motion to drive cylinders 125, 126, 127 and 128 may be used.

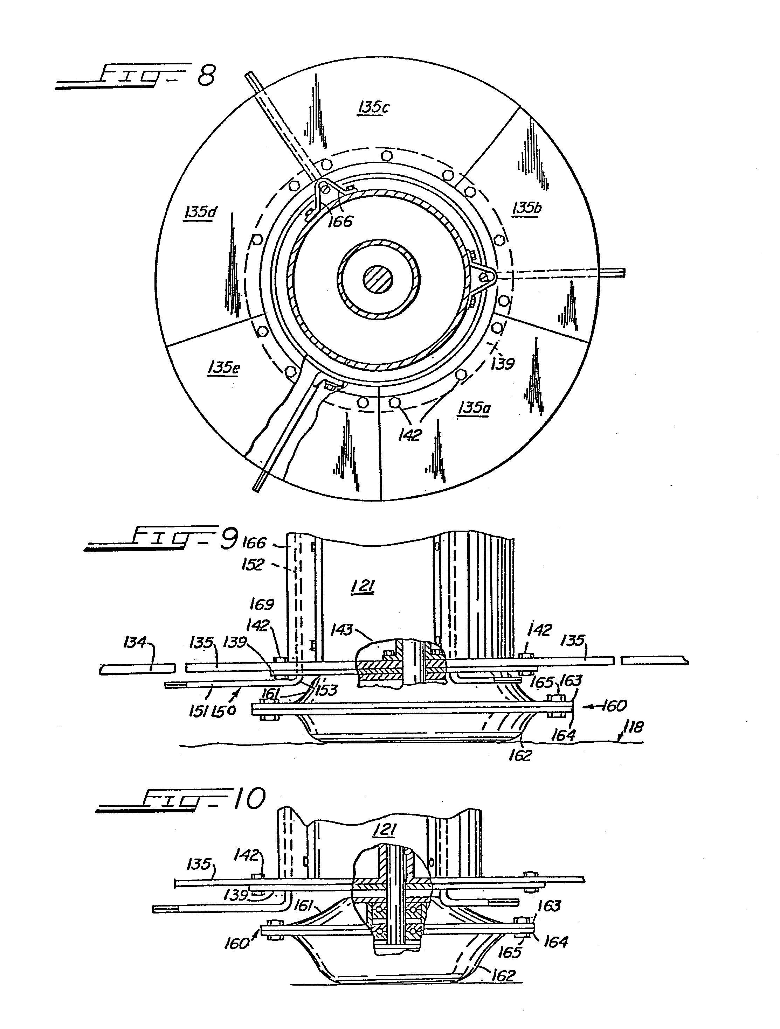

As best seen in Fig. 8 and 9, the bottom of rotor 121 is provided with horizontally disposed fastening bracket 139 extending radially therefrom. Bracket 139 is preferably a flat circular plate of greater diameter than rotor 121 and welded to the bottom of the tube forming rotor 121. Bracket 139 has suitable openings therethrough to permit removal of cutting member 150 comprising horizontally disposed blade portion 151 and vertically disposed mounting portion 152 from the upper side of the disc. Horizontal bracket 139 may be any suitable flange shape fastened rigidly to mowing rotor 121 and extending radially therefrom.

An important feature of the present invention is that disc 135 comprises segmented portions, shown in Fig. 8 as 135a, 135b, 135c, 135d and 135e, each such disc portion being readily detachably fastened to horizontal fastening bracket 139. While five segmented disc portions are shown in Fig. 8, it is suitable to have any number of segmented disc portions, preferably about 3 to about 8 such disc portions, especially preferred is 6 disc portions. Each disc portion is readily detachably fastened to horizontal bracket 139 in any suitable fashion. One method is shown in Fig. 8 and 9 as each disc portion, such as 135a, having a region overlapping with bracket 139 and having registered through holes with mating threaded screws and nuts 160 therethrough readily detachably fastening the disc portion to the bracket. A suitable number of such registered through holes and mating threaded screws and nuts are about 2 to 6 for each segmented disc portion, preferably 3 or 4. The abutting ends of the disc portions as shown in Fig. 8 are smooth and do not overlap, providing easy and separate removal of each disc portion for repair or replacement. It is also within the scope of this invention, particularly when lighter weight metal is used for the discs and when the diameters of the discs become large, to provide that one end of the abutting disc portion overlaps the adjacent disc portion on its lower side and to provide a through bolt therethrough for additional fastening toward the outer periphery of the disc portions. This will provide a smooth upper disc surface and a stiffer disc which can be made of lighter weight material, but the overlapping portion should not interfere with removal of a single disc portion for replacement. Formerly, discs at the lower portion of rotors of mowers have been an integral part of the rotor and difficult to replace. Since discs may be readily damaged by rocks and uneven ground surfaces, it is highly desirable to provide segmented discs wherein a damaged portion may be readily replaced.

In a preferred embodiment, as shown in Fig. 8, segmented disc portions 135a - e, have an inner radius which is outwardly of cutting member housing 166 to provide easy removal of both the disc portions and the cutting member and to provide that all of the disc portions may be identical.

0121103

As shown in Fig. 7, all of the horizontally disposed blade portions 151 of cutting members 150 are disposed beneath the discs, such as 135. The U-shaped mounting portion at the top of the cutting member ist sufficiently long to provide easy vertical adjustment for obtaining vertical displacement of the blades beneath adjacent discs, allowing blades of adjacent rotors to pass one over the other without the need for timing mechanisms.

Another aspect of the present invention is the provision of hollow, closed ground engaging skids disposed beneath each disc. The hollow, closed ground engaging skids, provide protection to the horizontal blade portion 151 of the cutting members and particularly to the transition portion 153 between the horizontal and vertical portion of the cutting members which is especially susceptible to damage from rocks or ground surface variances. Further, the hollow, closed ground engaging skids according to this invention may have their bottom portion readily and easily replaced in case of damage or the bottom portions of the ground engaging skids may be easily replaced to accommodate different blade height requirements. As shown in Fig. 9, ground engaging skid 160 comprises upper concave member 161 and lower concave member 162. Upper concave member 161 has flange 163 at its open end outer periphery and lower concave member 162 has flange 164 at its open end outer periphery. Upper concave member 161 is mounted on an associated rotor with its concavity open to the bottom and lower concave member 162, with its concavity open to the top, is readily detachably fastened in the area of its flange 164 to the area of flange 163 of upper concave member 161 by registered through holes and mating threaded screws and nuts 165 therethrough. It is suitable for lower concave member 162 to be readily detachably mounted to upper concave member 161 by 3 to 7 threaded screws and nuts 115. Thus, by lifting the ground engaging skid slightly above the ground surface, the threaded screws and nuts may be readily removed and the entire lower concave member 162 replaced in case of damage or if a different configuration lower concave member were desired, such as to elevate the cutting blades. The twopiece inverted dish-shaped ground engaging skid members having a flange at their open ends both provides protection to the horizontal blade portion 151 of the cutting member, the flange being radially extendable for as far as desired beneath horizontal blade portion 150 and provides a smooth ground engaging shape of good structural strength. As shown in Fig. 9, upper concave member 161 is identical to lower concave member 162 in shape. However, as shown in Fig. 10, lower concave member 162 may be of any depth desired and need not be symmetrical with upper concave member 161.

Ground engaging skids 160 may be fixedly mounted on the rotor carrying the ground engaging skid as shown in Fig. 9 by bolts 143 fixedly attaching upper concave member 161 beneath fastening bracket 139. Upper concave member 161 may also be journally mounted on rotor 121 carrying ground engaging skid 160 as shown in more detail in Fig. 10 and in the manner further described in more detail in the description with respect to Fig. 2 of U.S. Patent 4,292,790. The journal mounting of the ground engaging skid is accomplished by fastening only to upper concave member 161 and does not modify lower concave ground engaging member 162. The journal mounting of the ground engaging skid permits skid 160 to freely rotate or remain stationary. The ground engaging skids in addition to providing protection to the horizontal blade portions of the cutting members also provide ground support for the mower as it is driven over uneven ground. According to the present invention, such ground support for the mower is derived through ground engaging skids which may be used on each of the rotors. However, the closed ground engaging skids according to the present invention may also be used on only a portion of the mowing rotors, such as substituted for the ground engaging skids on alternate rotors as described in U.S. Patent 4,292,790.

While in the foregoing specification this invention has been described in relation to certain preferred embodiments thereof, and many details have been set forth for purpose of illustration, it will be apparent to those skilled in that art that the invention is susceptible to additional embodiments and that certain of the details described herein can be varied considerably without departing from the basic principles of the invention.

A 5403

- 1 -

Claims

1.  A mower comprising at least one generally vertically disposed rotatable rotor, said rotor(s) having a larger diameter generally horizontally disposed disc at its bottom, and said rotor(s) having a plurality of L-shaped blades, the vertical portion of each said blade attached in relation to said rotor and the horizontal portion of each said blade positioned in close relation to one side of said disc and extending radially therebeyond, characterized by
    said L-shaped blades comprising a flat vertical portion and a flat horizontal portion, said flat vertical portion attached in relation to said rotor by spring mounting means extending through an oversize hole in said flat vertical portion and comprising spring means in force transmitting relation to said flat vertical portion whereby horizontal application of force to said flat horizontal portion causes said spring means to flex providing arcuate yielding of said flat horizontal portion and automatic return to its cutting position and vertical application of force to said flat horizontal portion causes said spring means to flex providing vertical yielding of said flat horizontal portion and automatic return to its cutting position.

A 5403                    - 2 -

2.  The mower of claim 1 wherein said flat L-shaped blades are about 1/8 to about 3/8 inch thick and have a ratio of width to thickness of about 5 to 7.

3.  The mower of claims 1 or 2 wherein said spring mounting means comprises; an elongated shaft portion extending through said oversized hole in and extending beyond said flat vertical portion of said blade, a coil spring encircling said shaft portion in force transmitting relation to said flat vertical portion of said blade at one end and in force transmitting relation to an enlarged spring retaining portion affixed to said shaft at the other end.

4.  The mower of claims 1 to 3 wherein said mounting means comprises a machine bolt having an at least partially threaded shaft, an enlarged head portion at one end and an enlarged nut threaded on the other end and a coil spring encircling said shaft in force transmitting relation to said flat vertical portion of said blade at one end and in force transmitting relation to said enlarged head at the other end.

5.  The mower of claims 1 to 3 wherein said mounting means comprises a machine bolt having an at least partially threaded shaft, an enlarged head portion at one end and an enlarged nut threaded on the other end, and a coil spring encircling said shaft in force transmitting relation to said flat vertical portion of said blade at one end and in force transmitting relation to said enlarged nut at the other end.

6.   The mower of claims 1 to 5 having multiple drums wherein said flat horizontal portions of said L-shaped blades
     are closely adjacent the upper surface of said disc of
     one drum and said flat horizontal portions of said
     L-shaped blades are closely adjacent the lower surface
     of the disc of a second adjacent cooperating drum.

7.   The mower of claims 1 to 6 wherein the ends of said
     flat horizontal portions of said L-shaped blades are
     not in overlapping relation to adjacent discs.

8.   The mower of claims 1 to 7 wherein the end portions of
     said flat horizontal portions of said L-shaped blades
     are twisted with a sharpened leading edge downward,
     said end portions twisted about 5 to about 30 degrees
     relative to said horizontal portions.

9.   The mower of claims 1 to 8 wherein said L-shaped blades
     are attached by said spring mounting means to the
     interior of vertically extending tunnels removably
     attached to the exterior of said drum.

10.  The mower of claims 1 to 9 wherein said blades are
     attached by said spring mounting means to the exterior
     of said drum.

11.  The mower of claims 1 to 10 wherein said disc comprises
     segmented portions, each said disc portion readily
     detachably fastened to said horizontal bracket and said
     portions extending radially outwardly around said
     bracket forming a substantially horizontal plane segmented disc, said segmented discs being all disposed in substantially the same horizontal plane, the diameters of each of said segmented discs being such that the circumferences of segmented discs of adjacent rotors have a short space therebetween.

12. The mower of claim 11 wherein each said disc portion has a region overlapping said bracket, said overlapping region having 2 to 6 through holes registered with a corresponding number of through holes in said bracket and mating threaded screws and nuts therethrough readily detachably fastening said disc portion to said horizontal bracket.

13. The mower of claims 11 or 12 in which each segmented disc comprises 3 to 8 said disc portions.

14. The mower of claims 1 to 13 wherein at least one said disc has a hollow, closed ground engaging skid disposed beneath said disc, each said ground engaging skid comprising an upper concave member and a lower concave member, each said concave member having a flange at its open end outer periphery, said upper concave member being mounted on an associated rotor with its concavity open to the bottom, said lower concave member with its concavity open to the top being readily detachably fastened in the area of said flange to the area of said flange of said upper concave member.

15. The mower of claim 14 wherein said ground engaging skid extends radially outwardly beneath a portion of said horizontally disposed blade portions.

0121103

16. The mower of claims 14 or 15 wherein said upper concave member of said ground engaging skid is fixedly mounted on said rotor carrying said ground engaging skid.

17. The mower of claims 14 to 16 wherein said upper concave member of said ground engaging skid is journally mounted on said rotor carrying said ground engaging skid.

18. The mower of claims 14 to 17 wherein said flange area of said upper concave member and said flange area of said lower concave member each have 3 to 7 registered through holes and mating, threaded screws and nuts therethrough readily detachably fastening said lower concave member to said upper concave member.

19. The mower of claims 1 to 18 in which said mower header assembly structure is pivotally engaged with said frame structure in the rear portion of the mower, said frame structure having an overhead support arm extending upwardly and forwardly over said mower header assembly structure, and a spring extending downwardly from the forward portion of said arm suspending the forward portion of said mower header assembly structure.

20. The mower of claims 1 to 18 in which adjacent rotors move in opposite rotary directions and have an upwardly, forwardly inclined deflector extending upwardly from close above said discs between adjacent rotors mowing in opposite directions as viewed from the front of said mower to prevent blowing light crops downwardly in front of said mower.

0121103

FIG-1

FIG-2

FIG-3

FIG-4

FIG-5

FIG-6

FIG. 7

FIG. 11

2/3

0121103

0121103

FIG-8

135c

135d

135b

166

135e

139

135a

142

FIG-9

166
152

121

169
142

143

142 135

134 135 139

165 163

161 153

160

151 150

164

118

162

FIG-10

121

135 142

139 161

163

160

165 164

162

European Patent
Office

**EUROPEAN SEARCH REPORT**

Application number

| | DOCUMENTS CONSIDERED TO BE RELEVANT | | | EP 84102149.6 | |
|---|---|---|---|---|---|

| Category | Citation of document with indication, where appropriate, of relevant passages | Relevant to claim | CLASSIFICATION OF THE APPLICATION (Int. Cl. ³) |
|---|---|---|---|
| D,A | US - A - 4 292 790 (MATHEWS) <br> * Totality * <br> -- | 1-10, 14 | A 01 D 35/264 <br> A 01 D 55/18 |
| D,A | US - A - 4 292 789 (MATHEWS) <br> * Totality * <br> -- | 1-10, 14 | |
| D,A | DE - A - 2 422 651 (CIONI P.) <br> * Fig. 2 * <br> -- | 1 | |
| A | AT - B - 291 653 (KUHN FRERES & CIE) <br> * Fig. 4 * <br> -- | 1,14-18 | |
| D,A | US - A - 3 389 539 (P.W. ZWEEGERS) <br> * Fig. 2-4 * <br> -- | 1,14 | TECHNICAL FIELDS SEARCHED (Int. Cl. ³) |
| D,A | US - A - 3 391 522 (P.W. ZWEEGERS) <br> * Fig. 2,5-8 * <br> -- | 1,14,20 | A 01 D 35/00 <br> A 01 D 55/00 |
| D,A | US - A - 4 177 625 (KNIGHT) <br> * Fig. 1,2 * <br> -- | 1,14 | |
| D,A | US - A - 4 160 356 (MATHEWS) <br> * Fig. 1,2 * <br> ---- | 1,19 | |

The present search report has been drawn up for all claims

| Place of search | Date of completion of the search | Examiner |
|---|---|---|
| VIENNA | 15-05-1984 | SCHWAB |